# DEMANDE DE BREVET EUROPEEN

(11) **EP 2 189 310 A1**
(43) Date de publication de la demande: **26.05.2010**
(21) Numéro de dépôt: 09176555.2
(22) Date de dépôt: 19.11.2009
(51) Int. Cl.: B60G 7/04, F16F 1/38

(54) **Articulation élastique en particulier pour véhicule automobile, comprenant un limiteur de course axiale**

(30) Priorité: 20.11.2008 FR 0857870
(71) Demandeur: Peugeot Citroën Automobiles SA, 78140 Vélizy-Villacoublay (FR)
(72) Inventeur: Roy, Patrick, 25000, MONTBELIARD (FR)

(57) **Abrégé**

Articulation élastique reliant deux éléments (8, 32), en particulier pour véhicule automobile, comprenant un bloc élastique comportant une vis axiale de serrage (10) sur un premier élément formant une chape (8), ce bloc élastique étant inséré dans un deuxième élément (32) fixé sur son contour extérieur, la chape (8) comportant sur une face interne de ses bras, un limiteur de course (36) formant une butée axiale pour le bloc élastique, caractérisée en ce qu'une armature métallique (34) liée à la chape, comporte une matière élastique (40) prenant appui sur le limiteur de course (36) pour amortir ses vibrations.

## Description

La présente invention concerne une articulation élastique pivotante ainsi qu'un train arrière de véhicule automobile lié à la caisse du véhicule par ces articulations élastiques, et le véhicule lui-même.

Les véhicules automobiles comportent différents éléments de suspension reliés à la caisse du véhicule par des articulations élastiques, comportant généralement un bloc en caoutchouc pour assurer des mouvements suivant certains degrés de liberté.

Ces articulations élastiques réalisent aussi une filtration de vibrations permettant d'isoler les trains roulants de la caisse du véhicule, pour filtrer certaines vibrations venant du roulage et réduire les bruits.

En particulier, ces articulations élastiques sont généralement utilisées pour fixer un train arrière à traverse déformable sur la caisse du véhicule.

Le train arrière déformable comprend deux bras de suspension longitudinaux supportant en partie arrière les roues. L'avant de chaque bras de suspension est relié à la caisse du véhicule par une articulation élastique, permettant une oscillation dans un plan longitudinal. La caisse est supportée par des ressorts de suspension s'appuyant sur ces bras.

Les bras de suspension sont reliés entre eux par une traverse flexible et une barre anti-devers maintenant la géométrie tout en assurant par une déformation en torsion, une limitation de l'angle de roulis de la caisse.

Une telle articulation élastique décrite notamment dans le document FR-B1-2899516, comporte un bloc élastique de révolution comprenant un tube central métallique recevant une vis axiale de serrage sur une chape lié à la caisse du véhicule, et un contour externe cylindrique qui est fixé dans un alésage du bras de suspension.

On réalise ainsi entre le bras de suspension et la chape, une liaison pouvant s'articuler autour de l'axe de la vis de serrage, pour relier le train arrière à la caisse du véhicule.

Le bloc élastique comporte axialement un épaulement appelé collerette, qui peut prendre appui lors des déplacements sur la face interne d'un limiteur de course axiale solidaire de la chape, pour limiter cette course.

Un problème qui se pose est que la collerette du bloc élastique peut lors d'un appui se coller sur le limiteur de course, puis se décoller brutalement après un mouvement inverse du train, laissant ce limiteur de course entrer en vibration ce qui génère des bruits.

On peut en complément de ce dispositif, fixer par adhésion sur la face intérieure du limiteur de course une rondelle de matière antiadhérente, par exemple du type « Santoprène », pour former une interface qui ne colle pas sur le caoutchouc du bloc élastique. Un problème qui se pose est que cette matière antiadhérente soumise à de fortes contraintes, se dégrade rapidement, ce qui la rend inopérante.

La présente invention a notamment pour but d'éviter ces inconvénients de la technique antérieure, et d'apporter à la réalisation d'un limiteur de course axiale pour une articulation élastique, une solution simple et efficace pour éviter des bruits.

Elle propose à cet effet une articulation élastique reliant deux éléments, en particulier pour véhicule automobile, comprenant un bloc élastique comportant une vis axiale de serrage sur un premier élément formant une chape, ce bloc élastique étant inséré dans un deuxième élément fixé sur son contour extérieur, la chape comportant sur une face interne de ses bras, un limiteur de course formant une butée axiale pour le bloc élastique, caractérisée en ce qu'une armature métallique liée à la chape, comporte une matière élastique prenant appui sur le limiteur de course pour amortir ses vibrations.

Un avantage principal de l'articulation élastique selon l'invention, est que la matière élastique forme un moyen simple et économique permettant d'amortir des vibrations du limiteur de course, générées par un décollage brutal entre le bloc élastique et ce limiteur de course.

De plus l'articulation élastique selon l'invention peut comporter une ou plusieurs des caractéristiques suivantes, qui peuvent être combinées entre elles.

Selon une disposition particulière, le limiteur de course est une tôle comportant un rebord extérieur sur lequel appuie la matière élastique.

Avantageusement, la matière élastique est constituée par un caoutchouc surmoulé sur l'armature métallique.

Avantageusement, la matière élastique du surmoulage de caoutchouc, comporte des plots élastiques régulièrement espacés qui appuient sur le rebord extérieur du limiteur de course.

Le surmoulage de caoutchouc peut être appliqué sur une partie radialement extérieure de l'armature métallique, cette armature étant maintenue par la vis de serrage serrant sa partie radialement intérieure.

L'invention comporte aussi un train arrière de véhicule automobile, comportant des bras de suspension arrière disposés sensiblement longitudinalement, chaque bras comprenant à l'avant une articulation élastique qui le relie à la caisse du véhicule, caractérisé en ce que cette articulation élastique est réalisée suivant l'une des caractéristiques précédentes.

L'invention comporte de plus un véhicule automobile comportant un train arrière comprenant des bras de suspension arrière disposés sensiblement longitudinalement, chaque bras comprenant à l'avant une articulation élastique qui le relie à la caisse du véhicule, caractérisé en ce que cette articulation élastique est réalisée suivant l'une des caractéristiques précédentes.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est une vue en perspective d'un train arrière à traverse déformable, comprenant une articulation élastique selon l'invention;
- la figure 2 est une vue détaillée de la face tournée vers l'intérieur, de l'articulation élastique; et
- la figure 3 est une vue en coupe axiale de cette articulation élastique.

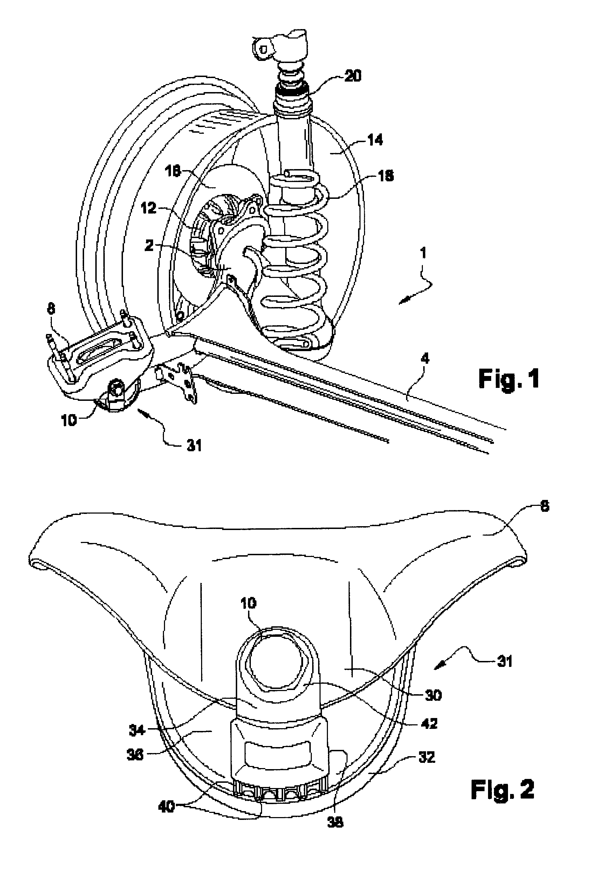

La figure 1 présente un bras de suspension 2 d'un train arrière 1 de véhicule, relié à l'autre bras par une traverse flexible 4 qui peut se déformer en torsion.

Chaque bras de suspension arrière 2 comprend une poutre disposée sensiblement longitudinalement, comportant à l'avant une articulation élastique 31 qui la relie à un support 8 formant une chape, fixé par des vis sous la caisse du véhicule non représentée. L'articulation élastique peut pivoter autour d'un axe matérialisé par une vis de serrage 10, qui est disposé sensiblement suivant un axe transversal du véhicule.

Le bras de suspension 2 comporte vers l'arrière un moyeu 12 portant une roue arrière 14, et un dispositif de freinage 16 de cette roue.

Chaque bras de suspension 2 supporte par ailleurs la caisse du véhicule par un dispositif de suspension, comprenant un ressort hélicoïdal 18 et un amortisseur hydraulique 20 pour freiner les oscillations de ce bras.

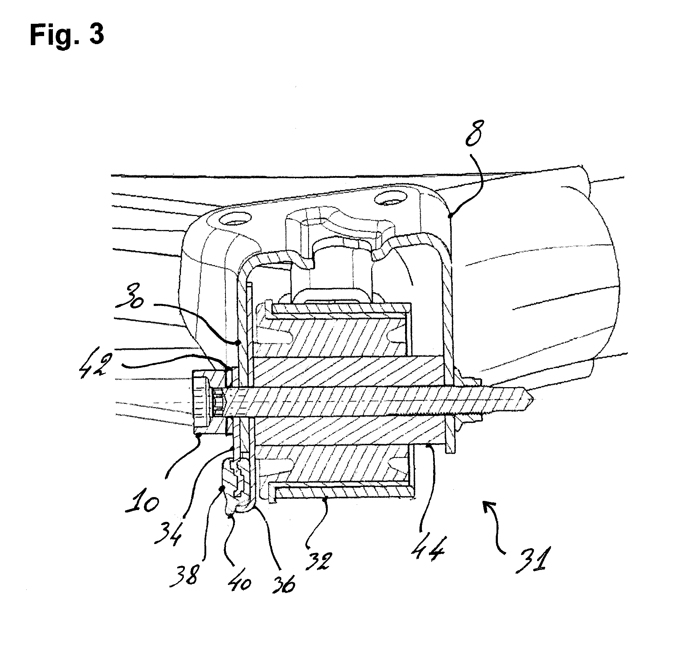

Les figures 2 et 3 détaillent l'articulation élastique 31. Le support de caisse constitue un premier élément réalisé en tôle emboutie, formant une chape 8 traversée par la vis de serrage 10, et contenant l'articulation élastique 31.

L'articulation élastique 31 comprend un bloc élastique comportant un tube central métallique 44, recevant dans son perçage axial la vis de serrage 10. En partant de la tête de la vis de serrage 10, on trouve successivement une rondelle d'appui 42, une patte radiale 34 formant l'armature métallique d'un amortisseur ou dispositif antivibratoire, un pli de tôle formant un premier bras 30 de la chape 8 tourné vers l'intérieur du véhicule, un limiteur de course 36, le tube central 44, un deuxième pli de tôle formant l'autre bras de la chape, et un écrou de serrage qui serre cet ensemble.

Le bloc élastique comporte une forme de révolution comprenant un perçage axial dans lequel est fixé le tube central. Sa surface cylindrique externe est fixée dans un manchon circulaire 32 formant la partie avant du bras de suspension 2.

L'armature métallique 34 comportant une forte raideur, est serrée sur la face externe du premier bras 30 de la chape 8, par la tête de la vis de serrage 10 prenant appui sur la rondelle 42.

La premier bras 30 de la chape 8 comporte un limiteur de course 36, constitué d'une tôle emboutie comportant un rebord plié suivant son contour, qui est tourné vers l'extérieur de la chape 8. Le limiteur de course 36 soudé à plat sur ce premier bras 30 à l'intérieur de la chape 8, constitue une butée axiale de fin de course sur laquelle le bloc élastique peut venir s'appuyer.

La partie inférieure de l'armature métallique 34 reçoit sur ses deux faces un surmoulage caoutchouc symétrique 38, ce qui permet de la monter indifféremment dans un sens ou dans l'autre. Une des faces du surmoulage caoutchouc 38 vient en appui sur le limiteur de course 36.

La partie inférieure de ce surmoulage caoutchouc 38 dépassant vers le bas de l'armature métallique 34, comporte cinq petits plots 40. Ces petits plots caoutchouc 40 disposés à la hauteur du rebord plié du limiteur de course 36, viennent appuyer sur celui ci pour amortir complètement des vibrations de ce limiteur de course.

Lorsque le bloc élastique se décolle brutalement du limiteur de course 36, l'amortisseur absorbe de l'énergie en freinant rapidement les oscillations de ce limiteur de course. II n'y a pas d'émission de bruit.

Ce dispositif amortisseur peut facilement être mis en oeuvre, et est économique. De plus n'étant pas soumis à de fortes contraintes de pression, il est robuste et peut tenir aisément pendant toute la durée de vie du véhicule.

Il peut être ajouté sans modification importante, sur les articulations élastiques existantes.

## Revendications

**1.** Articulation élastique reliant deux éléments (8, 32), en particulier pour véhicule automobile, comprenant un bloc élastique comportant une vis axiale de serrage (10) sur un premier élément formant une chape (8), ce bloc élastique étant inséré dans un deuxième élément (32) fixé sur son contour extérieur, la chape (8) comportant sur une face interne de ses bras, un limiteur de course (36) formant une butée axiale pour le bloc élastique, **caractérisée en ce qu'**une armature métallique (34) liée à la chape, comporte une matière élastique (40) prenant appui sur le limiteur de course (36) pour amortir ses vibrations.

**2.** Articulation élastique (31) selon la revendication 1, **caractérisée en ce que** le limiteur de course (36) est une tôle comportant un rebord extérieur sur lequel appuie la matière élastique (40).

**3.** Articulation élastique (31) selon la revendication 1 ou 2, **caractérisée en ce que** la matière élastique (40) est constituée par un caoutchouc surmoulé (38) sur l'armature métallique (34).

**4.** Articulation élastique (31) selon les revendications 2 et 3, **caractérisée en ce que** la matière élastique du surmoulage de caoutchouc (38), comporte des plots élastiques (40) régulièrement espacés qui appuient sur le rebord extérieur du limiteur de course (36).

**5.** Articulation élastique (31) selon la revendication 3 ou 4, **caractérisée en ce que** le surmoulage de caoutchouc (38) est appliqué sur une partie radialement extérieure de l'armature métallique (34), cette armature étant maintenue par la vis de serrage (10) serrant sa partie radialement intérieure.

**6.** Train arrière de véhicule automobile (1), comportant des bras de suspension arrière (2) disposés sensiblement longitudinalement, chaque bras comprenant à l'avant une articulation élastique (31) qui le relie à la caisse du véhicule, **caractérisé en ce que** cette articulation élastique est réalisée suivant l'une quelconque des revendications précédentes.

**7.** Véhicule automobile comportant un train arrière comprenant des bras de suspension arrière (2) disposés sensiblement longitudinalement, chaque bras comprenant à l'avant une articulation élastique (31) qui le relie à la caisse du véhicule, **caractérisé en ce que** cette articulation élastique est réalisée suivant l'une quelconque des revendications 1 à 5.
